# EUROPÄISCHE PATENTANMELDUNG

(11) **EP 4 215 785 A1**
(43) Veröffentlichungstag der Anmeldung: **26.07.2023**
(21) Anmeldenummer: 22207089.8
(22) Anmeldetag: 14.11.2022
(51) Int. Cl.: F16K 27/08, F16K 27/12

(54) **EINSCHRAUBVENTIL**

(30) Priorität: 24.01.2022 DE 102022101605
(71) Anmelder: Weber-Hydraulik GmbH, 78467 Konstanz (DE)
(72) Erfinder: Müller, Peter, 88719 Stetten (DE)
(74) Vertreter: LBP Lemcke, Brommer & Partner Patentanwälte mbB

(57) **Zusammenfassung**

Ein Einschraubventil besitzt einen Ventilkörper (2), in welchem in axialer Richtung eine Ventilbohrung (5) ausgebildet ist, sowie ein innerhalb der Ventilbohrung zwischen mindestens zwei Schaltstellungen bewegliches Ventilelement (3). Der Ventilkörper ist zumindest abschnittsweise mit einem Außengewinde (6') versehen, welches zum Einschrauben des Einschraubventils in eine mit Innengewinde (31c) versehene Kavität (31) eines Ventilblocks (30) oder Ventilgehäuses dient. Um die Abdichtung gegenüber dem das Ventil aufnehmenden Bauteil zu verbessert und insbesondere einen verbesserten Korrosionsschutz zu ermöglichen ist in axialer Verlängerung des Ventilkörpers ein weiterer Gewindebereich (6) mit Außengewinde ausgebildet, auf den eine Verschlusskappe (4) aufgeschraubt ist, welche die Ventilbohrung verschließt. Die Verschlusskappe weist eine Dichtung (22) und/oder Dichtfläche (22') auf, mit der sie beim Einbau gegenüber dem Ventilblock oder Ventilgehäuse um dessen Kavität gedichtet wird. Die Verschlusskappe kann außenseitig mit einer korrosionsbeständigen Beschichtung versehen oder aus einem korrosionsbeständigen Material hergestellt sein.

## Beschreibung

Die vorliegende Erfindung betrifft ein Einschraubventil mit einem Ventilkörper, in welchem in axialer Richtung eine Ventilbohrung ausgebildet ist, mit einem innerhalb der Ventilbohrung zwischen mindestens zwei Schaltstellungen beweglichen Ventilelement, wobei der Ventilkörper zumindest abschnittsweise mit einem Außengewinde versehen ist, welches zum Einschrauben des Einschraubventils in eine mit Innengewinde versehene Kavität eines Ventilblocks oder Ventilgehäuses dient.

Einschraubventile der vorgenannten Art sind an sich bekannt. Sie werden zum Beispiel in einen Ventilblock eingeschraubt, der eine hierfür vorgesehene Kavität mit Innengewinde aufweist, wobei im Ventilblock mehrere Kanäle ausgebildet sein können, die in die Kavität münden und mit den Abgängen des Einschraubventils korrespondieren. Derartige Einschraubventile können unterschiedliche Ventilfunktionen aufweisen, wie etwa Rückschlagventile oder vordruckgesteuerte Ventile.

Die Abdichtung des Einschraubventils gegenüber dem Ventilblock erfolgt in der Regel, indem eine Weichdichtung in eine Fase um die Kavität eingelegt wird, gegen die der Kopfbereich des Ventilkörpers anliegt. Die Ventilbohrung ist separat mit einer Verschlusskappe verschlossen, die in der Regel in ein in die Ventilbohrung eingeschnittenes Innengewinde eingeschraubt wird.

Hierbei kann es zu Problemen mit der Dichtung oder der Dichtkante am Ventilkörper kommen. Darüber hinaus muss bei vielen Anwendungen der Ventilkörper gegen Korrosion geschützt werden. Hierzu kann die Oberfläche des Ventilkörpers mit einer korrosionsbeständigen Beschichtung versehen werden. Allerdings sind die Schichtdicken nur schwer beherrschbar, was zu Toleranzproblemen der Bauteile führt.

Eine Aufgabe der Erfindung besteht daher darin, ein Einschraubventil anzugeben, bei dem die Abdichtung gegenüber dem das Ventil aufnehmenden Bauteil verbessert ist und welches insbesondere einen verbesserten Korrosionsschutz ermöglicht.

Die Aufgabe wird gelöst durch die Merkmale des Anspruchs 1. Vorteilhafte Weiterbildungen sind den abhängigen Ansprüchen zu entnehmen.

Bei einem Einschraubventil der eingangs genannten Art ist erfindungsgemäß in axialer Verlängerung des Ventilkörpers ein weiterer Gewindebereich ausgebildet, auf den eine Verschlusskappe aufgeschraubt ist, welche die Ventilbohrung verschließt, und die Verschlusskappe eine Dichtung und/oder Dichtfläche aufweist, mit der sie beim Einbau gegenüber dem Ventilblock oder Ventilgehäuse um dessen Kavität gedichtet wird. Der weitere Gewindebereich kann vorzugsweise mit einem Außengewinde versehen sein, welches z.B. auch eine Verlängerung des Außengewindes sein, mit dem das Einschraubventil in die Kavität eingeschraubt wird. Steigung und Gewindedurchmesser der beiden Außengewinde kann sich hierbei auch unterscheiden. Alternativ kann der weitere Gewindebereich aber auch ein Innengewinde umfassen, auf welches die Kappe, die in diesem Fall einen inneren Gewindestift umfasst, mit welchem die Kappe auf das Innengewinde geschraubt wird, ansonsten aber den Ventilkörper in dessen axialen Verlängerung umfasst und über dessen Außendurchmesser heraussteht, um die Dichtung aufzunehmen und/oder die Dichtfläche auszubilden.

Hierdurch ergibt sich eine einfache und zuverlässige Abdichtung gegenüber dem das Ventil aufnehmenden Bauteil. Zudem kann die Verschlusskappe außenseitig mit einer korrosionsbeständigen Beschichtung versehen oder aus einem korrosionsbeständigen Material hergestellt sein. Da die Verschlusskappe keine kritischen Oberflächen oder relevante Maße besitzt, können hierbei deutlich höhere Toleranzen zugelassen werden, sodass die Konstruktion vereinfacht und die Prozesssicherheit erhöht wird, ohne dass Abstriche bei der Leistungsfähigkeit des Einschraubventils in Kauf genommen werden müssten. Da nur eine Komponente, nämlich die Verschlusskappe, beschichtet werden muss, ergeben sich zudem Kostenvorteile. Alternativ kann die Verschlusskappe auch aus einem korrosionsbeständigen Material wie etwa nichtrostendem Stahl hergestellt werden, wodurch sich dieselben Vorteile ergeben.

Insbesondere kann der Ventilkörper unbeschichtet ausgebildet sein, d.h. keine korrosionsbeständige Beschichtung aufweisen, wobei dessen über den Ventilblock oder das Ventilgehäuse herausstehendes Ende ringsum dichtend von der Verschlusskappe überdeckt ist. Damit steht der Ventilkörper nicht in Kontakt mit der Außenatmosphäre und ist daher einer schädlichen Einwirkung von außen wie etwa Feuchtigkeitseinwirkung nicht ausgesetzt.

Die Dichtung oder Dichtfläche kann insbesondere an einer axialen Stirnseite der Verschlusskappe ausgebildet sein. Hierdurch ergibt sich eine besonders einfache Konstruktion und eine einfache Montage. Z.B. kann an der axialen Stirnseite eine Ringnut ausgebildet sein, in die eine als Ringdichtung ausgebildete Dichtung eingesetzt ist. Die Verschlusskappe kann somit zusammen mit der Dichtung geliefert und auf den Ventilkörper aufgeschraubt werden. Das Ventil wiederum kann an der Verschlusskappe eingeschraubt werden und die in die Ringnut eingesetzte Dichtung dichtet gegenüber der Oberfläche des Ventilblocks oder Ventilkörpers.

Der Rand der Verschlusskappe kann auch in der Art eines Kragens über den Außenumfang des Einschraubventils hinausstehen und eine Dichtfläche bilden, über die das Einschraubventil gegenüber dem Ventilblock oder Ventilgehäuse umlaufend um die Kavität gedichtet wird.

Die Verschlusskappe kann außerdem mit einer Schraubhandhabe, insbesondere einem Außensechskant, versehen sein. Natürlich kann die Schraubhandhabe auch durch einen Innensechskant, ein Rändel, eine Steckverzahnung, einen Torx oder dergleichen realisiert sein. Hierdurch kann nicht nur die Verschlusskappe einfach auf den Ventilkörper aufgeschraubt werden, sondern an der Schraubhandhabe kann auch das Einschraubventil selbst in den Ventilblock oder das Ventilgehäuse eingeschraubt werden.

Bei einer vorteilhaften Ausgestaltung weist die Ventilbohrung zwei oder mehr Abgänge auf, die von dem Ventilelement je nach Schaltstellung wechselweise freigegeben und versperrt und/oder fluidleitend miteinander verbunden werden. Der Ventilkörper kann hierbei an seinem Außenumfang zwischen den Abgängen mit Dichtungen und/oder Dichtflächen versehen sein, an denen er beim Einbau gegenüber dem Ventilblock oder Ventilgehäuse gedichtet wird. Die Druckpotenziale an den einzelnen Abgängen des Ventilkörpers sind somit im Ventilblock bzw. Ventilgehäuse gegeneinander gedichtet, während die Abdichtung gegenüber der Außenatmosphäre erfindungsgemäß über die Verschlusskappe erfolgt.

Vorzugsweise ist das Ventilelement von einer zumindest teilweise in einem als Federraum ausgebildeten Bereich der Ventilbohrung aufgenommenen Ventilfeder in Richtung einer Endlage federbelastet. Außerdem kann zur Druckentlastung des Federraums eine in den Federraum mündende Entlastungsbohrung vorgesehen sein, welche den Ventilkörper im Bereich des Außengewindes oder der von den Abgängen abgewandten Seite des Außengewindes durchdringt. Als Abdichtung zwischen der Entlastungsbohrung und den übrigen Abgängen dient somit zumindest ein Teil des Außengewindes. Hierbei ist zwar mit einer geringen Leckage zu rechnen. In vielen Anwendungsfällen ist dies jedoch kein Problem und kann sogar erwünscht sein, um beispielsweise eine Steuerleitung nach Betätigung zu entlasten.

Bei einer bevorzugten Ausgestaltung kann der Außendurchmesser des Ventilkörpers im Bereich der Entlastungsbohrung ringförmig reduziert sein. Hierdurch wird ein Freiraum geschaffen, über den, unabhängig von der Drehlage des Ventilkörpers innerhalb der Kavität, die Entlastungsbohrung mit einem im Ventilblock bzw. Ventilgehäuse ausgebildeten Kanal kommuniziert. Alternativ oder zusätzlich kann selbstverständlich auch im Ventilblock bzw. Ventilgehäuse ein entsprechender ringförmiger Freiraum im Bereich der Entlastungsbohrung vorgesehen sein, beispielsweise in Form einer um die Kavität eingearbeitete Fase.

Als Ventilelement kann eine Ventilkugel oder ein Ventilkolben dienen. Letzterer kann vorzugsweise innerhalb des Ventilblocks mittels einer Kolbendichtung gegenüber dem Federraum gedichtet sein. Somit besteht innerhalb des Ventils keine fluidische Verbindung zwischen dem Federraum und dem Rest der mit den Abgängen kommunizierenden Ventilbohrung. Insbesondere ist vorgesehen, dass durch den Ventilkolben keine Längsbohrung verläuft, welche den Federraum mit dem Druckpotenzial an einem der Abgänge verbinden würde. Die Entlüftung des Federraums erfolgt einzig über die genannte Entlastungsbohrung.

Die Verschlusskappe kann auch als Verlängerung des Federraums dienen und einen Abschnitt der Ventilfeder aufnehmen. Hierdurch kann das Ventil insgesamt kompakter gebaut werden. Außerdem verhindert die Verschlusskappe das Eindringen von Feuchtigkeit und Schmutz in das Innere des Ventils nach dessen herstellerseitigen Zusammenbaus. Somit bildet die Verschlusskappe nicht nur den dichtenden Verschluss der Ventilbohrung, sondern gleichzeitig auch den dichtenden Verschluss der Kavität im Ventilblock bzw. Ventilgehäuse. Die Verschlusskappe kann somit eine Dichtung oder Dichtfläche aufweisen, mit der sie beim Einbau gegenüber dem Ventilblock oder Ventilgehäuse und dessen Kavität gedichtet wird.

Die Erfindung betrifft außerdem eine Ventilanordnung umfassend einen Ventilblock oder ein Ventilgehäuse mit einer mit Innengewinde versehenen Kavität, in die ein Einschraubventil der vorstehend erläuterten Art eingeschraubt ist. Hierbei kann insbesondere vorgesehen sein, dass die Kavität einen umlaufenden Freiraum aufweist und der Freiraum vorzugsweise von einer Fase an der Öffnungsseite der Kavität gebildet wird. Die Fase an der Kavität kann nach außen hin von der mit Dichtung versehenen Verschlusskappe verschlossen sein, die über den Außendurchmesser des Ventilkörpers hinaussteht und gegen den Ventilblock bzw. das Ventilgehäuse anliegt. Ebenso kann vorgesehen sein, dass das Einschraubventil vollständig in den Ventilblock oder das Ventilgehäuse versenkt wird, sodass Ventilblock bzw. Ventilgehäuse keine nach außen ragenden Störkonturen aufweisen. In diesem Fall kann z.B. im Ventilblock oder Ventilgehäuse um die Kavität eine entsprechende Senkung ausgebildet sein, in welcher die Verschlusskappe des Einschraubventils verschwindet.

Weitere Ausgestaltungen und Eigenschaften ergeben sich aus nachfolgenden Beschreibung von Ausführungsbeispielen anhand der Figuren. Es zeigt:
- Figur 1: einen Schnitt durch die Kavität eines Ventilblocks oder Ventilgehäuses mit eingesetztem Einschraubventil und

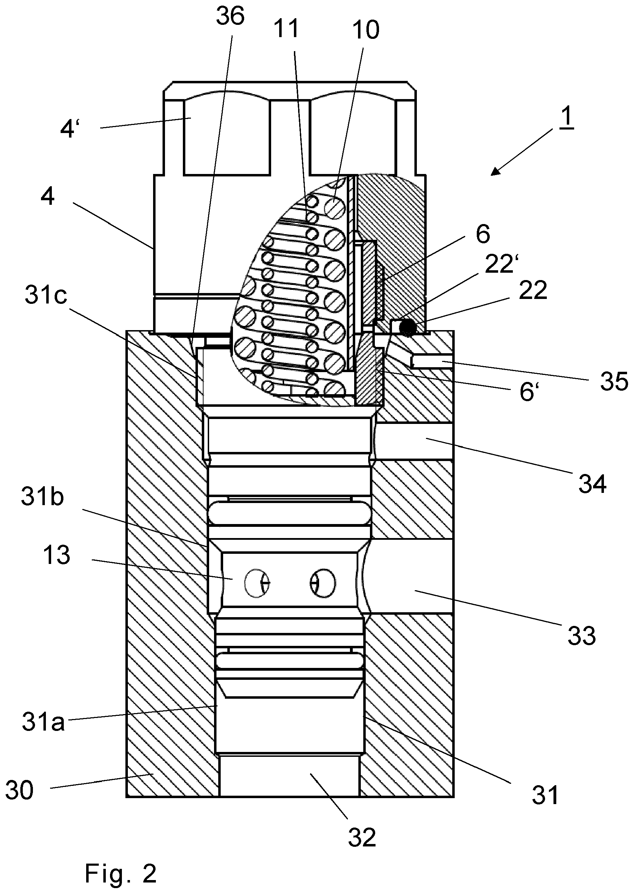

- Figur 2: den Schnitt aus Figur 1 mit nur teilweise geschnittenem Einschraubventil.

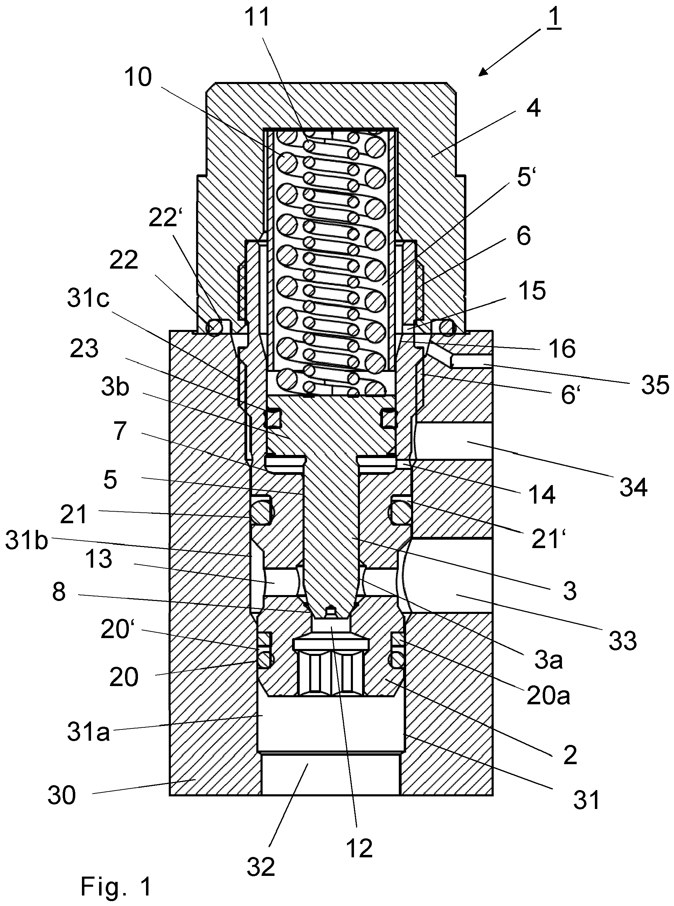

Das in Figur 1 gezeigte Einschraubventil 1 umfasst einen länglichen Ventilkörper 2 mit kreisrundem Querschnitt und einer gestuften, axial verlaufenden Ventilbohrung 5, in die ein in axialer Richtung verschiebbarer Ventilkolben 3 eingesetzt ist. Nach oben hin ist der Ventilkörper 2 mit einer Verschlusskappe 4 verschlossen, die auf ein Außengewinde 6 aufgeschraubt ist, welches im oberen Bereich des Ventilkörpers 2 ausgebildet ist.

Die Ventilbohrung 5 ist als Stufenbohrung mit einer Stufe 7 ausgeführt. Entsprechend ist der Ventilkolben 3 mit einem unteren Kolbenbereich 3a mit geringerem Durchmesser versehen, an den sich ein Kolbenbereich 3b mit größerem Durchmesser anschließt. Der Kolbenbereich 3b ist mit einer Kolbendichtung 23 versehen, welche den Ventilkolben 3 innerhalb des durch die Stufe 7 erweiterten Bereichs der Ventilbohrung 5 dichtet. Am unteren Ende der Ventilbohrung 5 ist ein Ventilsitz 8 ausgebildet, der von einem konisch zulaufenden Endbereich des Ventilkolbens 3 in dessen Endlage sitzdicht verschlossen wird. In der Verlängerung der Ventilbohrung 5 mündet diese in axialer Richtung in einen ersten Abgang 12. Oberhalb des Ventilsitzes 7 ist eine radial verlaufende Bohrung 13 angeordnet, die einen zweiten, seitlichen Abgang von der Ventilbohrung 5 bildet. Im Bereich oberhalb der Stufe 7 befindet sich eine weitere radial verlaufende Bohrung 14, die einen dritten Abgang von der Ventilbohrung 7 bildet.

Oberhalb des Ventilkolbens 3 befindet sich eine Ventilfeder 10, die teilweise in dem als Federraum 5' ausgebildeten oberen Bereich der Ventilbohrung 5 und teilweise innerhalb der Verschlusskappe 4 aufgenommen ist. Innerhalb der Ventilfeder 10 befindet sich eine zweite, schmalere Feder 11, welche sich ebenfalls an dem Ventilkolben 3 abstützt. In Verlängerung des Außengewindes 6, auf welches die Verschlusskappe 4 aufgeschraubt ist, ist an der Außenseite des Ventilkörpers 2 ein weiterer Bereich mit Außengewinde 6' angeordnet. In den Federraum 5' mündet im Bereich des Außengewindes 6, 6' bzw. oberhalb des unteren Gewindebereichs 6' eine weitere Querbohrung 15, die als Entlastungsbohrung für den Federraum 5' dient.

In Figur 1 ist das Einschraubventil 1 in eine Ventilkavität 31 eines Ventilblocks 30 eingeschraubt gezeigt. Der Ventilblock 30 ist hier nur schematisch vereinfacht und ausschnittsweise gezeigt und kann weitere Bauelemente umfassen. In dem Ventilblock 30 sind mehrere Kanäle in Form von Bohrungen 32, 33, 34, 35 ausgebildet, die zu den Abgängen 12, 13, 14, 15 des Einschraubventils 1 führen. Von unten führt in Verlängerung der Ventilkavität 31 eine Bohrung 32, die als Zuleitung dient, zu der Ventilkavität 31. Etwas höher befindet sich eine Querbohrung 33, die auf Höhe des Abganges 13 des Einschraubventils 1 mündet. Darüber befindet sich eine weitere Querbohrung 34, die auf Höhe des zweiten Abganges 14 mündet und für eine Steuerleitung genutzt wird. Schließlich befindet sich wiederum etwas darüber eine schräg verlaufende Bohrung 35, die zu einem angefasten Bereich um die Kavität 31 führt und zur Entlastung des Federraums 5' des Einschraubventils 1 dient.

An seinem Außendurchmesser ist der Ventilkörper 2 in einem unteren Bereich mithilfe eines Dichtungsrings 20, der in eine Ringnut 20' eingesetzt ist, gegenüber der Ventilkavität 31 abgedichtet. Eine zweite Dichtstufe wird von einer Ringdichtung 21, die in eine weitere Ringnut 21' eingesetzt ist, gebildet. Die Ringdichtung 21 befindet sich zwischen der Querbohrung 13 und der Querbohrung 14 und dichtet somit die Druckpotenziale am zweiten und dritten Abgang der Ventilbohrung 5 gegeneinander ab. Die beiden Ringnuten 20', 21' dienen gleichsam als Dichtflächen für die Dichtungen 20, 21. Die von der Dichtung 21 gebildete zweite Dichtungsstufe hat einen etwas größeren Außendurchmesser, als die von der Dichtung 20 gebildete erste Dichtungsstufe. In die Ringnut 21' ist zusätzlich ein Stützring 21a eingesetzt, der den Ventilkolben 3 in der Ventilbohrung 5 führt.

Entsprechend ist die Ventilkavität 31 gestuft ausgeführt. Im untersten Bereich 31a hat sie den geringsten Innendurchmesser, der dem Außenumfang der Dichtung 20 entspricht. Unterhalb der Bohrung 33 erweitert sich der Innendurchmesser der Kavität 31. In diesem Bereich 31b entspricht der Innendurchmesser dem Durchmesser der Dichtung 21. Unterhalb der Bohrung 34 erweitert sich der Innendurchmesser der Kavität 31 nochmals und geht oberhalb der Bohrung 34 in ein Innengewinde 31c über, in welches der untere Bereich des Außengewindes 6' des Einschraubventils 1 eingeschraubt ist.

Auf eine dritte Dichtungsstufe, welche die Druckpotenziale zwischen den von der Querbohrung 14 gebildeten zweiten Abgang und der Entlastungsbohrung 15 gegeneinander abdichtet, ist hier bewusst verzichtet. Zwischen den Druckpotenzialen an den Bohrungen 14 und 15 befindet sich lediglich der untere Teil 6' des Außengewindes 6, 6'.

Eine weitere Dichtung 22 befindet sich an der Unterseite der im Durchmesser über den Ventilkörper 2 überstehenden Verschlusskappe 4 und dichtet um die Ventilkavität 31 herum ab, in die das Einschraubventil 1 eingeschraubt ist. Hierzu ist an der axialen Stirnseite der Verschlusskappe 4 eine Ringnut 22' ausgebildet, in die die als Ringdichtung ausgebildete Dichtung 22 eingesetzt ist. Die Verschlusskappe 4 kann somit zusammen mit der Dichtung 22 geliefert und werksseitig auf den Ventilkörper 2 aufgeschraubt werden. Das Einschraubventil 1 wiederum kann an der Verschlusskappe 4 in die Kavität 31 eingeschraubt werden. Hierzu ist die Verschlusskappe 4, ohne dass die Erfindung hierauf beschränkt wäre, mit einem Außensechskant 4' versehen. Die in die Ringnut 22' eingesetzte Dichtung 22 dichtet das eingeschraubte Einschraubventil 1 gegenüber der Oberfläche des Ventilblocks 30.

Das in Figur 1 gezeigte Einschraubventil 1 dient als Senkbremsventil, welches einen Lastdruck am Eingang 12 gegen die Kraft der Ventilfedern 11, 12 hält, und zwar bis zu einem Maximaldruck, bei dem die auf die Durchlassfläche des Ventilsitzes 8 ausgeübte Druckkraft die Federkraft der Ventilfedern 10, 11 überschreitet. Durch Druckbeaufschlagung am Steuereingang 14 kann der Ventilkolben 3 gegen die Kraft der Ventilfedern 10, 11 nach oben bewegt werden, sodass ein Durchlass zwischen dem Eingang 12 und dem Ausgang 13 des Ventils freigegeben wird und somit Hydraulikflüssigkeit von der Bohrung 32 (Eingang) zu der Bohrung 33 (Ausgang) fließen kann, beispielsweise in Richtung eines angeschlossenen Tanks.

Eine Entlastung des Federraums 5' erfolgt über die Entlastungsbohrung 15, die im genannten Anwendungsfall über eine im Ventilblock ausgebildete Leckölleitung drucklos zu einem Tank hin verbunden wird. Die Steuerleitung 14, die über das Gewinde 6 eine gewisse Leckage zu der Entlastungsbohrung 15 hin aufweist, kann somit ebenfalls nach Beendigung des Schaltvorgangs zu der mit der Entlastungsbohrung 15 verbundenen Leckölleitung entlastet werden, sodass der Druck in der Steuerleitung 14 sich nach Beendigung eines Schaltvorgangs langsam wieder abbaut.

Im Federraum 5' befindet sich eine weitere Querschnittsreduzierung der Ventilbohrung 5, die durch eine Schlupfschräge 16 gebildet wird. Diese dient zum Einführen und Zentrieren des Ventilbolzens 2. Die Schlupfschräge 16 befindet sich unterhalb der Entlastungsbohrung 15. Hierdurch wird verhindert, dass die Kolbendichtung 23 über den gegebenenfalls scharfkantigen Rand der Entlastungsbohrung 15 gleiten muss und hierbei beschädigt werden kann.

Auf den oberen Bereich des Außengewindes 6 ist wie bereits erläutert die Abdeckkappe 4 aufgeschraubt. Diese dichtet mit der Dichtung 22 gegen die Oberfläche des Ventilblocks 30. Am Öffnungsrand der Kavität 31 ist eine Fase 36 ausgespart, die einen Freiraum um den Ventilkörper 2 im Bereich der Entlastungsbohrung 15 bildet, der von der Abdeckkappe 4 abgeschlossen und gegenüber der Atmosphäre gedichtet wird. Auf diese Weise wird ein ringförmiger Freiraum im Bereich der Entlastungsbohrung 15 geschaffen, der über die Bohrung 35 im Ventilblock 30 angeschlossen werden kann. Je nach Anwendungsfall kann der Federraum 5' über den Ventilblock 30 beispielsweise zu einer Leckölleitung verbunden werden, zur Atmosphäre belüftet sein oder auch, je nach Ventilart, als aktive Steuerleitung verwendet werden. Zusätzlich ist im gezeigten Ausführungsbeispiel das Außengewinde 6 im Bereich der Entlastungsbohrung 15 entfernt, z.B. weggedreht, und der Außendurchmesser des Ventilkörpers 2 in diesem Bereich reduziert, sodass ein ringförmiger Freiraum entsteht. Dieser erweitert den für die Entlastung des Federraums 5' zur Verfügung stehenden Freiraum, sodass auch im Falle unterschiedlicher Einschraubtiefen des Einschraubventils 1 stets eine fluidleitende Verbindung zur Bohrung 35 sichergestellt ist.

## Patentansprüche

1. Einschraubventil (1) mit einem Ventilkörper (2), in welchem in axialer Richtung eine Ventilbohrung (5) ausgebildet ist, und mit einem innerhalb der Ventilbohrung (5) zwischen mindestens zwei Schaltstellungen beweglichen Ventilelement (3),
wobei der Ventilkörper (2) zumindest abschnittsweise mit einem Außengewinde (6') versehen ist, welches zum Einschrauben des Einschraubventils (1) in eine mit Innengewinde (31c) versehene Kavität (31) eines Ventilblocks (30) oder Ventilgehäuses dient,
**dadurch gekennzeichnet, dass**
in axialer Verlängerung des Ventilkörpers (2) ein weiterer Gewindebereich (6) vorzugsweise mit Außengewinde ausgebildet ist, auf den eine Verschlusskappe (4) aufgeschraubt ist, welche die Ventilbohrung (5) verschließt, und die Verschlusskappe (4) eine Dichtung (22) und/oder Dichtfläche (22') aufweist, mit der sie beim Einbau gegenüber dem Ventilblock (30) oder Ventilgehäuse um dessen Kavität (31) gedichtet wird.

2. Einschraubventil nach Anspruch 1, bei dem die Verschlusskappe (4) außenseitig mit einer korrosionsbeständigen Beschichtung versehen oder aus einem korrosionsbeständigen Material hergestellt ist.

3. Einschraubventil nach Anspruch 2, bei dem der Ventilkörper (2) unbeschichtet ist und dessen über den Ventilblock (30) oder das Ventilgehäuse herausstehendes Ende ringsum dichtend von der Verschlusskappe (4) überdeckt ist.

4. Einschraubventil nach einem der vorangehenden Ansprüche, bei dem die Dichtung (22) oder Dichtfläche (22') an einer axialen Stirnseite der Verschlusskappe (4) ausgebildet ist.

5. Einschraubventil nach Anspruch 4, bei dem an der axialen Stirnseite eine Ringnut (22') ausgebildet ist, in die die als Ringdichtung ausgebildete Dichtung (22) eingesetzt ist.

6. Einschraubventil nach einem der vorangehenden Ansprüche, bei dem die Verschlusskappe (4) mit einer Schraubhandhabe, insbesondere einem Außensechskant (4'), versehen ist.

7. Einschraubventil nach Anspruch 1, bei dem die Ventilbohrung (5) zwei oder mehr Abgänge (12, 13, 14) aufweist, die von dem Ventilelement (3) je nach Schaltstellung wechselweise freigegeben und versperrt und/oder fluidleitend miteinander verbunden werden und der Ventilkörper (2) an seinem Außenumfang zwischen den Abgängen (12, 13, 14) Dichtungen (20, 21) und/oder Dichtflächen (21', 22') aufweist, an denen er beim Einbau gegenüber dem Ventilblock (30) oder Ventilgehäuse gedichtet wird.

8. Einschraubventil nach einem der vorangehenden Ansprüche, bei dem das Ventilelement (3) von einer zumindest teilweise in einem als Federraum (5') ausgebildeten Bereich der Ventilbohrung (5) aufgenommenen Ventilfeder (10, 11) in Richtung einer Endlage federbelastet ist, insbesondere bei dem in den Federraum (5') eine Entlastungsbohrung (15) mündet, welche den Ventilkörper (2) im Bereich des Außengewindes (6, 6') oder der von den Abgängen (12, 13, 14) abgewandten Seite des Außengewindes (6') durchdringt.

9. Einschraubventil nach einem der vorangehenden Ansprüche, bei dem der Außendurchmesser des Ventilkörpers (2) im Bereich der Entlastungsbohrung (15) ringförmig reduziert ist.

10. Ventilanordnung umfassend einen Ventilblock (30) oder ein Ventilgehäuse mit einer mit Innengewinde (31a) versehenen Kavität (31), in die ein Einschraubventil (1) nach einem der vorangehenden Ansprüche eingeschraubt ist, wobei insbesondere um die Kavität (31) ein umlaufender Freiraum, vorzugsweise in Form einer Fase (36) an der Öffnungsseite der Kavität (31) ausgebildet ist.
